# EUROPÄISCHE PATENTSCHRIFT

(11) **EP 1 232 379 B1**
(45) Veröffentlichungstag und Bekanntmachung des Hinweises auf die Patenterteilung: **03.03.2004**
(21) Anmeldenummer: 00985101.5
(22) Anmeldetag: 27.11.2000
(51) Int. Cl.: G01L 1/14

(54) **KAPAZITIVER SENSOR AUF TRANSPARENTEM TRÄGER**
CAPACITIVE SENSOR ON A TRANSPARENT CARRIER
DETECTEUR CAPACITIF SUR SUPPORT TRANSPARENT

(30) Priorität: 26.11.1999 DE 29920733 U
(43) Veröffentlichungstag der Anmeldung: 21.08.2002
(73) Patentinhaber: Platz, Karl-Otto, 51674 Wiehl-Bomig (DE)
(72) Erfinder: Platz, Karl-Otto, 51674 Wiehl-Bomig (DE)
(74) Vertreter: Dallmeyer, Georg, Dipl.-Ing.
(86) Internationale Anmeldenummer: PCT/EP2000/011857
(87) Internationale Veröffentlichungsnummer: WO 2001/038841

(56) Entgegenhaltungen:
- EP-A- 0 348 229
- WO-A-96/15464
- DE-A- 3 111 696
- US-A- 4 290 052
- US-A- 5 317 919
- US-A- 5 446 616
- US-A- 5 824 902
- US-A- 5 869 791
- US-A- 5 952 998
- PATENT ABSTRACTS OF JAPAN vol. 013, no. 438 (P-939), 3. Oktober 1989 (1989-10-03) & JP 01 167731 A (TOPPAN PRINTING CO LTD), 3. Juli 1989 (1989-07-03)
- PATENT ABSTRACTS OF JAPAN vol. 1998, no. 07, 31. März 1998 (1998-03-31) & JP 05 204546 A (INTERNATL BUSINESS MACH CORP <IBM>), 13. August 1993 (1993-08-13)

## Beschreibung

Die Erfindung betrifft einen kapazitiven Sensor nach dem Oberbegriff des Anspruchs 1.

Derartige Sensoren können auf Glasflächen zum Einsatz kommen, auf denen Schaltfunktionen ausgeübt werden sollen.

Aus der US-A-5,869,791 ist ein kapazitiver Sensor mit den Merkmalen des Oberbegriffs des Anspruchs 1 bekannt. Der kapazitive Sensor ist auf einem Träger aus Glas angeordnet, wobei der transparente Träger mehrere elektrisch leitende transparente Schichten, z.B. ITO-Schichten aufweist, die als transparente Sensorfläche dienen.

Der Erfindung liegt die Aufgabe zugrunde, einen kapazitiven Sensor zu schaffen, der es ermöglicht, auf einem Träger aus transparentem Material, z.B. Glas, eine Annäherung an sich festzustellen. Ein weiteres Ziel besteht darin, darüber hinaus eine Lokalisation der Annäherung vorzunehmen.

Zur Lösung dieser Aufgabe dienen die Merkmale des Anspruchs 1.

Die Erfindung sieht in vorteilhafter Weise vor, dass der transparente Trägermaterial eine elektrisch leitende transparente Schicht aufweist, die als transparente Sensorfläche dient.

Die elektrisch leitende Schicht ist in verschiedene Bereiche durch eingearbeitete Isolationsbahnen unterteilt, wobei an jede getrennte Sensorfläche unabhängige kapazitive Sensoren angeschlossen sind. Aufgrund der Unterteilungen durch die Isolationsbahnen werden zeilenförmige Sensorbahnen gebildet.

Zwischen den Sensorflächen sind schmale Trennflächen angeordnet, die durch Erdung neutral geschaltet sind.

Die elektrisch leitende Schicht weist Kontaktierungen auf.

Die elektrisch leitende Schicht kann berührungslos in ein elektrisches Feld einer in der Nähe angeordneten und unmittelbar angeschlossenen zweiten Sensorfläche kapazitiv eingekoppelt sein.

Jede elektrisch leitende Schicht kann mit einer transparenten, kratzfesten und isolierenden Schicht beschichtet sein.

Der Träger kann aus gehärtetem Glas oder aus Verbundglas bestehen.

Bei einem bevorzugten Ausführungsbeispiel sind mehrere elektrisch leitende transparente Schichten vorgesehen, deren kapazitive Funktion einander durchdringen.

Es können auch mehrere transparente Träger mit jeweils einer elektrisch leitenden Schicht aufeinandergeschichtet sein.

Nach einer weiteren Alternative ist vorgesehen, dass ein einziger transparenter Träger mehrere übereinandergeschichtete elektrisch leitende transparente Schichten aufweist, die mit isolierenden Zwischenschichten getrennt sind.

Im folgenden werden unter Bezugnahme auf die Zeichnungen Ausführungsbeispiele der Erfindung näher erläutert:

Es zeigen:
- Fig. 1: einen ersten kapazitiven Sensor mit diagonal verlaufenden elektrisch leitenden, transparenten Schichten (Sensorzeilen),
- Fig. 2: einen zweiten transparenten Träger mit entgegengesetzt verlaufenden transparenten, elektrisch leitenden Schichten,
- Fig. 3: ein Ausführungsbeispiel eines kapazitiven Gesamtsensors zur Lokalisation einer Berührung, und
- Fig. 4: ein Ausführungsbeispiel eines kapazitiven Sensors mit inselartigen nicht-aktiven Flächen.

Das Funktionsprinzip beruht darauf, dass ein transparentes Trägermaterial (z.B. Glas) ebenfalls transparent leitend beschichtet wird (z.B. durch Bedampfung mit Indiumzinnoxyd - ITO). Diese leitende Beschichtung wird elektrisch kontaktiert und dient als transparente Sensorfläche für einen kapazitiven Näherungsschalter.

Die Kontaktierung kann mittels unmittelbarer Kontaktierung durch Löten oder Kleben auf Glas, Heat-Seal-Technik, leitende Klebebänder, lötfähige Beschichtungen, Sitberteitdruck o.ä. hergestellt werden. Weiterhin ist eine elektrische Kontaktierung der Sensorfläche auch berührungslos möglich, indem die Beschichtung in ein elektrisches Feld einer lediglich in die Nähe gebrachten und unmittelbar angeschlossenen Sensorfläche kapazitiv eingekoppelt wird. Dies kann durch eine Rekalibrierung der ursprünglichen Sensorfläche erfolgen und ist auch im laufenden Betrieb einer elektronischen Schaltung möglich.

Die Lokalisation der Annäherung z.B. einer Hand gegenüber der Sensorfläche wird erreicht, indem die leitende, transparente Beschichtung durch eingearbeitete Isolationsbahnen 11 in verschiedene Bereiche aufgeteilt wird, und an jede getrennte Sensorfläche unabhängige kapazitive Sensoren angeschlossen werden. Zur eindeutigen Trennung und zur Vermeidung einer gegenseitigen Einkopplung kann zwischen zwei Sensorflächen auch eine im Verhältnis schmale Trennfläche verbleiben, die ggf. durch Erdung neutral geschaltet wird.

Der Aufbau eines kapazitiven Glassensors für das oben genannte Funktionsprinzip kann prinzipiell auf zwei Arten erfolgen:
1. Der Aufbau kann auf einem einzigen, transparentem Glasträger 2 erfolgen, der die Funktion ausführt und ggf. mit weiteren Gläsern, Glastaschen und/oder Hinterlegungen zu einem Endprodukt verarbeitet werden. Der Träger 2,4 einer transparenten Sensorfläche kann auch aus gehärtetem Glas bestehen oder aus Verbundglas.
   Die leitende Beschichtung mit dem transparenten Trägermaterial wird wie eine single-layer-Leiterplatte betrachtet und entsprechend werden die einzelnen Sensorflächen 6,10 aus der leitfähigen Beschichtung herausgearbeitet.
   Alle Sensorflächen 6,10 liegen hier immer parallel nebeneinander.
   Eine abschließende, ebenfalls transparente Bedampfung mit einem kratzfesten und isolierenden Material, z.B. Aluminiumoxyd, verhindert eine Beschädigung der leitenden Schichten.
2. Das Funktionsprinzip der einlagigen Arbeitsweise kann durch Kombination mehrerer einlagiger Schichten miteinander verknüpft werden, so dass nicht für jede Sensorfläche ein einzelner kapazitiver Elektroniksensor benötigt wird, sondern eine Zeilen- und Spaltenanordnung den Elektronikaufwand minimiert. Jede Zeile und jede Spalte erhält einen eigenen kapazitiven Sensor, der z.B. den Aufwand für 16 Tasten in einer 4 x 4 Matrix auf acht kapazitive Sensoren vermindert. Ebenfalls vermindert sich die Notwendigkeit der Kontaktierung auf der transparente Sensorfläche.
   Wichtig für die Lokalisation ist, dass sich die kapazitive Funktion verschiedener Sensorflächen (in den verschiedenen Ebenen) durchdringen und einen unsichtbaren, gemeinsamen 3-dimensionalen Funktionsraum schaffen.

Die verschiedenen aktiven Ebenen der Sensorflächen können durch unterschiedliche Verfahren hergestellt werden, z.B.:
a) indem mehrere transparente Träger 2,4 mit leitenden Beschichtungen nach dem Prinzip wie unter 1. beschrieben aufeinander gelegt werden oder
b) indem ein transparenter Träger 2,4 mehrfach, ggf. unter Verwendung einer isolierenden Zwischenbeschichtung, mit leitendem, transparentem Material beschichtet wird.

Bei Verwendung des Aufbaus nach Variante a) kann z.B. mit dem Trägermaterial Glas ein mehrlagiges, extrem stabiles Verbundsicherheitsglas hergestellt werden, bei dem die leitenden Sensorflächen auf der Innenseite des Glases angebracht sind und somit völlig kratzfest und für jeden unmittelbaren Zugriff entzogen eingearbeitet sind. Das kapazitiv aktive Feld arbeitet damit durch die Materialstärke des Glases hindurch. Die beiden transparenten Träger 2,4 aus Glas können auf unterschiedliche Weise miteinander verbunden werden: in Verbundglastechnik mit einer PVB-Folie, in Vergusstechnik mit einer transparenten Vergussmasse, in Isolierglastechnik mit Luftzwischenraum, lose aufeinandergelegt oder mittels eines geeigneten Klebers verbunden. Ein ggf. zwischen den transparenten Trägern eingebrachter Siebdruck kann deckend, translucent und/oder partiell ausgeführt sein. Der transparente Sensor kann zwischen oder hinter den Glasscheiben mit einer Funktionsschicht verbunden sein, die eine veränderbare Transmission des Gesamtaufbaues erlaubt.

Bei Verwendung mehrerer leitender Schichten auf einem transparenten Träger 2,4 gelten die vorgenannten Aufbaumöglichkeiten entsprechend. Generell wird die leitende Schicht der ersten Sensorfläche zunächst aufgetragen und anschießend je nach Anforderung in mehrere Sensorflächen 8,12 oder Sensorbahnen aufgeteilt. Anschließend erfolgt eine isolierende, transparente Beschichtung, auf der im dritten Arbeitsgang eine zweite elektrisch leitende Schicht die nächste Sensorfläche bildet. Diese kann ebenfalls aufgeteilt werden. Optional folgen weitere Schichten, die ggf. mit einer abschließenden isolierenden Beschichtung auf der Oberfläche geschützt werden.

Der Einfachheit halber wird nachfolgende nur der Aufbau mit zwei separaten Trägermaterialien beschrieben:

In dem ersten Träger 2 werden diagonal aktive kapazitive Sensoren ausgearbeitet, deren aktive Flächen regelmäßige Vergrößerungen in Form von Erweiterungen 8,12 besitzen, an denen diese diagonale Sensorbahn 6,10 besonders empfindlich ist und ein stärker aktives kapazitives Feld besitzt. Damit ist bereits ein unregelmäßig kapazitiver Vollflächensensor entstanden. Jede diagonale Sensorbahn 6,10 wird an einen eigenen kapazitiven Sensor angeschlossen.

Hierbei sind die schraffiert gezeigten Flächen jeweils eine zusammenhängende aktive Fläche 6,10, die umlaufend durch eine Isolationsbahn 11 aus der übrigen Fläche der leitenden Beschichtung herausgearbeitet werden. Die länger herausgeführten Diagonalen sind die Anschlussleitungen 7, 9 zum Anschlusskabel, die je nach Glas zentral zusammengeführt werden. Die Diagonalen sind zwischen den Erweiterungen 8,12 so schmal wie möglich auszuführen und in den Figuren überproportional breitgezeichnet.

Im zweiten Träger 4 wird dies ebenfalls durchgeführt, jedoch um 90° versetzt und zwar so, dass sich die Erweiterungen 8,12 beider Sensorebenen zu einem vollflächigen Muster ergänzen.

Werden diese beiden Sensorebenen passgenau übereinandergelegt, entsteht ein kapazitiver Gesamtsensor, der über die Auswertung der Diagonalspalten und Diagonalzeilen auf den Trägern 2,4 eine Lokalisation der Berührung erlaubt.

Eine Annährung in einem Kreuzungspunkt wird nun idealerweise von zwei kapazitiven flächigen Erweiterung 8 einer Diagonalzeile und zwei kapazitiven flächigen Erweiterungen 12 einer Diagonalspalte erfasst. Über die Auswertung von Zeilenund Spaltensignalen gelangt man zur Position.

Die Erweiterungen 8 des hinten liegenden Trägers 2 liegen dabei hinter einer nicht aktiven Fläche des vorderen Trägers 4. Damit trotzdem aktiv eine Annäherung detektiert werden kann, ohne durch die davor liegende nicht-aktive Schicht elektrisch abgeschirmt zu werden, kann diese nicht-aktive Fläche des vorderen Trägers 4 in ein kapazitives Feld eingekoppelt und praktisch mitbenutzt werden. Dies soll jedoch nur lokal über der jeweils aktuellen Erweiterung des hinteren Trägers 2 möglich sein. Daher wird die nicht-aktive Fläche des vorderen Trägers 4 (zwischen den Diagonalspalten) in Inseln 16 aufgelöst, die in die Erweiterungen 8 des hinteren Trägers 2 eingekoppelt werden können. Gleichzeitig ist ein Randbereich um jede Insel 16 vorgesehen, der an Masse angeschlossen wird. So wird ein Einkoppeln der Inseln 16 in die Erweiterungen der gleichen Sensorebene unterbunden.

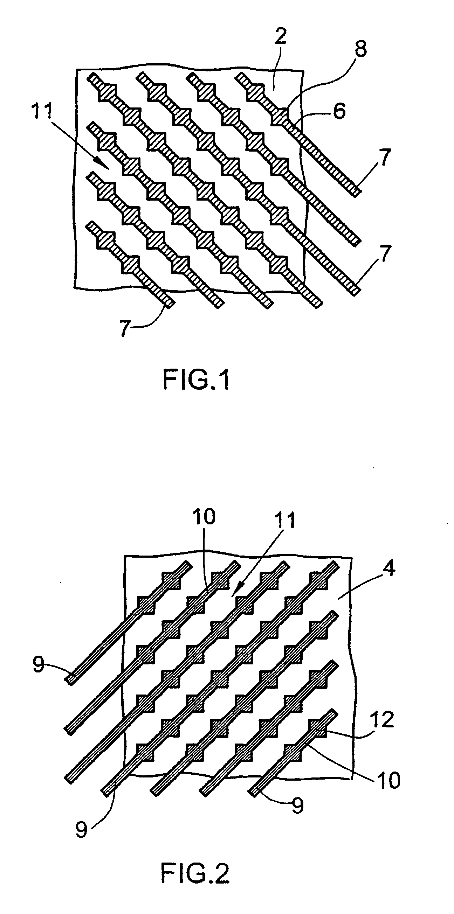

Fig. 1 zeigt die aktiven Diagonalzeilen eines Trägers 2 mit Erweiterungen 8.

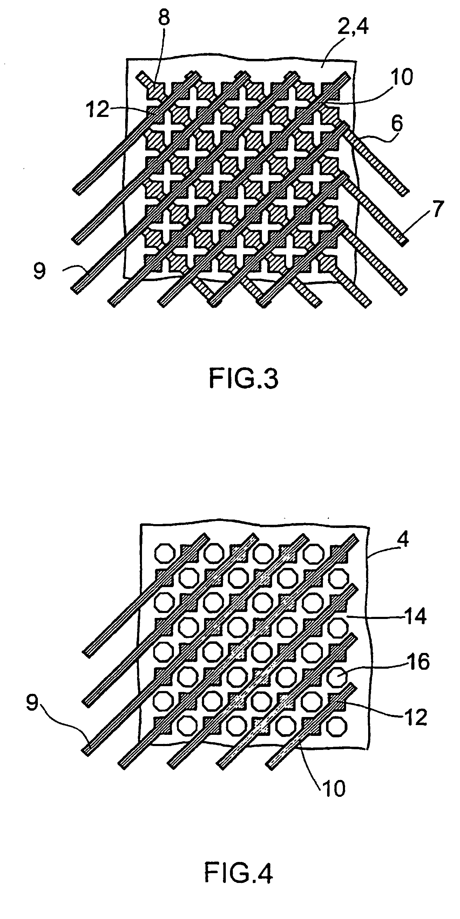

Die Achtecke in dem Ausführungsbeispiel der Fig. 4 zeigen Inseln 16 zwischen den aktiven Zeilen, die in die dahinterliegenden Erweiterungen des nächsten Trägers 2 eingekoppelt werden können.

Der Zwischenraum zwischen den Inseln 16 und den elektrisch leitenden Schichten 10 ist geerdet.

Damit ein mehrtägiger Träger (z.B. Verbundglas) von beiden Seiten bedient werden kann, wird auch der zweite Träger gleichartig aufgebaut, d.h. ebenfalls mit Inseln 16 und geerdetem Zwischenraum versehen.

Der kapazitive Glassensor weist neben den bekannten Vorteilen einer Glasoberfläche (Kratzfestigkeit, Beständigkeit gegen Säure, Laugen, Öle, Fette, UV-Festigkeit, Option der Entspiegelung) weitere Vorteile durch den spezifischen Aufbau auf:
- eine einfache Kontaktierung kann bei einem Verbundglasaufbau durch eine Lochbohrung der hinteren Glasscheibe erfolgen, ohne einen wesentlichen Einbruch der Stabilität
- die Schaltelektronik wird immer über Relais gesteuert und kann somit unmittelbar Leistung schalten
- es ist möglich, die Sensorfläche plan in einer Ebene mit einer Frontplatte einzubauen
- gewölbte, gebogene, gebohrte und freie Glasformen sind möglich
- verschleißfreie Bedienoberfläche
- vandalensicher
- durch Verbundglasaufbau splitterbindende Wirkung
- durch Härtung des Glases Erhöhung der Schlagfestigkeit
- der Sensor kann umlaufend komplett mit freien Glaskanten hergestellt werden die Kontaktierung der Sensorfläche kann durch bloßes Auflegen der Einkopplungsquellen erreicht werden.

Der kapazitive Glassensor kann beispielsweise in Glasscheiben eines Kraftfahrzeuges eingesetzt werden. Ein weiteres Einsatzgebiet sind beispielsweise Glasscheiben einer Duschkabine. Der Glassensor kann zusätzlich auf seiner rückwärtigen Seite mit einem Exciter zum Übertragen akustischer Informationen versehen sein.

## Patentansprüche

1. Kapazitiver Sensor auf mindestens einem Träger (2,4) aus transparentem Material, z.B. Glas, wobei der transparente Träger (2,4) eine elektrisch leitende transparente Schicht (6,10) aufweist, die als transparente Sensorfläche dient,
**dadurch gekennzeichnet,**
**daß** die elektrisch leitende Schicht (6,10) in verschiedene Bereiche durch eingearbeitete Isolationsbahnen (11) unterteilt ist,
**daß** an jede getrennte Sensorfläche unabhängige kapazitive Sensoren angeschlossen sind,
**daß** zwischen den Sensorflächen schmale Trennflächen (14) angeordnet sind, und
**daß** die Trennflächen (14) durch Erdung neutral geschaltet sind.

2. Kapazitiver Sensor nach Anspruch 1, **dadurch gekennzeichnet, daß** die elektrisch leitende Schicht (6, 10), Kontaktierungen (7,9) aufweist.

3. Kapazitiver Sensor nach Anspruch 1 oder 2, **dadurch gekennzeichnet, daß** die elektrisch leitende Schicht (6, 10) berührungslos in ein elektrisches Feld einer in der Nähe angeordneten weiteren Sensortläche kapazitiv eingekoppelt ist.

4. Kapazitiver Sensor nach einem der Ansprüche 1 bis 3, **dadurch gekennzeichnet, daß** die elektrisch leitende Schicht (6, 10) mit einer transparenten, kratzfesten und isolierenden Schicht beschichtet ist.

5. Kapazitiver Sensor nach einem der Ansprüche 1 bis 4, **dadurch gekennzeichnet, daß** der Träger (2,4) aus gehärtetem Glas oder aus Verbundglas besteht.

6. Kapazitiver Sensor nach einem der Ansprüche 1 bis 5, **dadurch gekennzeichnet, dass** die elektrisch leitende Schicht (6,10) Erweiterungen (8,12) aufweist.

7. Kapazitiver Sensor nach einem der Ansprüche 1 bis 6, **dadurch gekennzeichnet, daß** mehrere elektrisch leitende transparente Schichten vorgesehen sind, deren kapazitive Funktion einander durchdringen.

8. Kapazitiver Sensor nach Anspruch 7, **dadurch gekennzeichnet, daß** mehrere transparente Träger (2,4) mit jeweils einer elektrisch leitenden Schicht (6, 10) aufeinander geschichtet sind.

9. Kapazitiver Sensor nach Anspruch 7, **dadurch gekennzeichnet, daß** ein einziger transparenter Träger (2,4) mehrere übereinander geschichtete elektrisch leitende transparente Schichten aufweist, die mit isolierenden Zwischenschichten getrennt sind.

10. Kapazitiver Sensor nach Anspruch 8, **dadurch gekennzeichnet, dass** die nicht-aktive Fläche eines Trägers (4) Inseln (16) bildet, die in die Erweiterungen (8) des anderen Trägers (2) eingekoppelt ist.

11. Kapazitiver Sensor nach einem der Ansprüche 7 bis 10, **dadurch gekennzeichnet, dass** die elektrisch leitenden Schichten (6, 10) diagonal verlaufen und dass zwei aufeinanderliegende Sensorflächen entgegengesetzt diagonal verlaufende elektrisch leitende bahnförmige Schichten (6,10) aufweisen.

12. Kapazitiver Sensor nach einem der Ansprüche 6 bis 11, **dadurch gekennzeichnet, dass** die elektrisch leitenden Schichten (6,10) von benachbarten Sensorflächen sich zwischen den jeweiligen Erweiterungen (8,12) kreuzen.

## Claims

1. Capacitive sensor on at least one carrier (2,4) made of transparent material, e. g. glass, wherein the transparent carrier (2,4) comprises an electrically conducting transparent layer (6,10) which serves as transparent sensor surface
**characterized in that**
the electrically conducting layer (6,10) is subdivided by incorporated insulation paths (11) into various portions,
independent capacitive sensors are connected to each separate sensor surface,
narrow separating surfaces (14) are arranged between the sensor surfaces, and
the separating surfaces (14) are grounded so as to be neutral.

2. Capacitive sensor according to claim 1, **characterized in that** the electrically conducting layer (6,10) comprises terminal lines (7,9).

3. Capacitive sensor according to claim 1 or 2, **characterized in that** the electrically conducting layer (6,10) is capacitively coupled in a contactless manner into an electrical field of another sensor surface located in the vicinity.

4. Capactive sensor according to one of claims 1 to 3, **characterized in that** the electrically conducting layer (6,10) is coated with a transparent, scratch-resistant and insulating layer.

5. Capacitive sensor according to one of claims 1 to 4, **characterized in that** the carrier (2,4) is made of tempered glass or compound glass.

6. Capacitive sensor according to one of claims 1 to 5, **characterized in that** that the electrically conducting layer (6,10) comprises enlargements (8,12).

7. Capacitive sensor according to one of claims 1 to 6, **characterized in that** a plurality of electrically conducting transparent layers are provided whose capacitive functions penetrate each other.

8. Capacitive sensor according to claim 7, **characterized in that** a plurality of transparent carriers (2,4) each having an electrically conducting layer (6,10) are placed one upon the other.

9. Capacitive sensor according to claim 7, **characterized in that** a single transparent carrier (2,4) comprises a plurality of electrically conducting transparent layers placed one upon the other, said layers being separated from each other by insulating intermediate layers.

10. Capacitive sensor according to claim 8, **characterized in that** the nonactive surface of a carrier (4) forms islands (16) which are coupled into the enlargements (8) of the other carrier (2).

11. Capacitive sensor according to one of claims 7 to 10, **characterized in that** the electrically conducting layers (6,10) extend diagonally, and that two sensor surfaces lying one upon the other comprise path-type electrically conducting layers (6,10) diagonally extending in opposite directions.

12. Capacitive sensor according to one of claims 6 to 11, **characterized in that** the electrically conducting layers (6,10) of neighboring sensor surface cross each other between the respective enlargements (8,12).

## Revendications

1. Capteur capacitif sur au moins un support (2, 4) en matériau transparent, par exemple en verre, le support transparent (2, 4) comportant une couche électriquement conductrice transparente (6, 10) qui sert de surface de capteur transparente,
**caractérisé en ce que**
la couche électriquement conductrice (6, 10) est divisée en différentes zones par des bandes d'isolation (11) incrustées,
des capteurs capacitifs indépendants sont raccordés à chaque surface de capteur séparée,
des surfaces étroites de séparation (14) sont disposées entre les surfaces de capteur, et
les surfaces de séparation (14) sont mises à l'état neutre par mise à la terre.

2. Capteur capacitif selon la revendication 1, **caractérisé en ce que** la couche électriquement conductrice (6, 10) comporte des contacts (7, 9).

3. Capteur capacitif selon la revendication 1 ou 2, **caractérisé en ce que** la couche électriquement conductrice (6, 10) est soumise à un couplage capacitif sans contact dans un champ électrique d'une autre surface de capteur disposée à proximité.

4. Capteur capacitif selon l'une des revendications 1 à 3, **caractérisé en ce que** la couche électriquement conductrice (6, 10) est recouverte d'une couche transparente, isolante et résistant à l'abrasion.

5. Capteur capacitif selon l'une des revendications 1 à 4, **caractérisé en ce que** le support (2, 4) est en verre trempé ou en verre feuilleté.

6. Capteur capacitif selon l'une des revendications 1 à 5, **caractérisé en ce que** la couche électriquement conductrice (6, 10) comporte des élargissements (8, 12).

7. Capteur capacitif selon l'une des revendications 1 à 6, **caractérisé en ce que** sont prévues plusieurs couches électriquement conductrices transparentes dont les fonctions capacitives interfèrent entre elles.

8. Capteur capacitif selon la revendication 7, **caractérisé en ce que** plusieurs supports transparents (2, 4) avec respectivement une couche électriquement conductrice (6, 10) sont empilés les uns sur les autre.

9. Capteur capacitif selon la revendication 7, **caractérisé en ce qu'**un support transparent unique (2, 4) comporte plusieurs couches électriquement conductrices transparentes empilées les unes sur les autres, qui sont séparées par des couches intermédiaires isolantes.

10. Capteur capacitif selon la revendication 8, **caractérisé en ce que** la surface non active d'un support (4) forme des îlots (16) qui sont couplés aux élargissements (8) de l'autre support (2).

11. Capteur capacitif selon l'une des revendications 7 à 10, **caractérisé en ce que** les couches électriquement conductrices (6, 10) s'étendent en diagonale et **en ce que** deux surfaces de capteurs superposées comportent des couches électriquement conductrices (6, 10) en forme de bande s'étendant suivant des diagonales opposées.

12. Capteur capacitif selon l'une des revendications 6 à 11, **caractérisé en ce que** les couches électriquement conductrices (6, 10) de surfaces de capteur adjacentes se croisent entre les élargissements respectifs (8, 12).
